# EUROPÄISCHE PATENTANMELDUNG

(11) **EP 0 780 217 A2**
(43) Veröffentlichungstag der Anmeldung: **25.06.1997**
(21) Anmeldenummer: 96119238.2
(22) Anmeldetag: 30.11.1996
(51) Int. Cl.: B29D 23/00, B29C 53/58, F16L 9/04

(54) **Rohr oder dgl. Formstück aus thermoplastischem Kunststoff und Verfahren zu seiner Herstellung**

(30) Priorität: 20.12.1995 DE 19547821
(71) Anmelder: Karl-Heinz Krah GmbH Werkzeug- und Vorrichtungsbau, 57520 Schutzbach (DE)
(72) Erfinder: Krah, Karl-Heinz, Dipl.-Ing., 57567 Daaden-Biersdorf (DE)
(74) Vertreter: KEIL & SCHAAFHAUSEN Patentanwälte

(57) **Zusammenfassung**

Es wird ein Rohr oder dgl. Formstück (1) aus thermoplastischem Kunststoff beschrieben, deren Wandung aus einem schraubenlinienförmig umlaufenden Bandmaterial besteht, wobei zwischen den aneinander grenzenden Materialbändern (4, 5, 6) verschmolzende Wickelnähte (2) verlaufen. Außerdem weist das Rohr oder dgl. Formstück (1) ein als Längsverstärkung dienendes, auf der Außenseite der Wandung aufgebrachtes Hohlprofilrohr (3) auf. Um bei einem derartigen Rohr oder dgl. Formstück (1) eine sichere Verbindung im Überlappungsbereich zweier Materialbänder zu gewährleisten ist vorgesehen, daß das Profilmaterial auf der Wickelnaht (2) der Wandung angeordnet ist und die Überlappung eines oder mehrerer Materialbänder (4, 5, 6) überdeckt.

## Beschreibung

Die Erfindung betrifft ein Rohr oder dergleichen Formstück wie zylindrischen Behälter mit einer Wandung aus thermoplastischem Kunststoff, insbesondere aus schraubenlinienförmig umlaufendem Bandmaterial, wobei die Wandung eine längs des Materialbandes verlaufende verschmolzene bzw. verschweißte Wickelnaht aufweist, und mit einem als Längsverstärkung dienenden, auf der Außenseite der Wandung aufgebrachten umlaufenden Profilmaterial (Profilverstärkung), insbesondere einem Hohlprofilrohr, und ein Verfahren zur Herstellung eines solchen Rohres oder dergleichen Formstück.

Rohre oder dergleichen Formstücke wie zylindrische Behälter mit im Längsschnitt profilierter Rohrwand aus schraubenlinienförmig gewickeltem Bandmaterial aus thermoplastischem Kunststoff sind u.a. aus der DE 20 14 648 A1, DE 31 45 122 C2 und DE 32 13 551 C1 bekannt. Solche auch als Wickelrohre bezeichneten Rohre oder dgl. Formstücke können mit sehr großen Nennweiten hergestellt werden, wobei durch die Profilierung der Rohrwand eine Erhöhung der Festigkeit des Rohres bei geringem Materialeinsatz erzielt wird.

Bei dem aus der DE 31 45 122 C2 bekannten Wickelrohr wird zunächst ein omegaförmiges Profil aus thermoplastischem Kunststoff hergestellt, in dessen nach außen vorkragenden rohrförmigen Abschnitt als Verstärkung ein Stützschlauch eingelagert ist. Dieses Profil wird mit seinem Fußlängsrandflanschen auf eine Wickeltrommel spiralförmig überlappend aufgewickelt, so daß eine Wandung mit einer spiralförmigen Wickelnaht entsteht. Die mehr oder weniger große Überlappung des spiralgewickelten Bandes ist jedoch nicht zuverlässig, so daß die Verbindung von manchen Herstellern derartige Rohre zusätzlich noch verschweißt wird. Trotzdem bleibt die Verbindung die Schwachstelle der Rohrwandung. Dies liegt zum einen daran, daß bei der Herstellung der Wickelrohre die Temperatur nicht zu hoch sein darf, da ansonsten das als Profilverstärkung dienende Hohlprofil zusammenfällt. Bei zu geringer Temperatur ist dagegen der thermoplastische Kunststoff noch relativ zäh, so daß kein vollständiges Verschmelzen an der Wickelnaht erfolgt. Um bei den bekannten Rohren oder dgl. Formstücken eine hinreichende Verbindung an der Wickelnaht zu erreichen, muß deshalb die Wickelnaht durch Druck oder Wärme zusätzlich bearbeitet werden. Es hat sich dennoch gezeigt, daß die Homogenität der Wandung im Bereich der Wickelnaht eine Schwachstelle der bekannten Wickelrohre darstellt.

Der Erfindung liegt daher die Aufgabe zugrunde, ein Rohr oder dgl. Formstück der eingangs genannten Art zu schaffen, bei dem eine sichere Verbindung im Überlappungsbereich zweier Materialbänder gewährleistet ist, und ein Verfahren zur Herstellung eines solchen Rohres oder dgl. Formstück.

Diese Aufgabe wird mit der Erfindung dadurch gelöst, daß das Profilmaterial auf der Wickelnaht der Wandung angeordnet ist und die Überlappung eines oder mehrerer Materialbänder überdeckt.

Der Erfindung liegt dabei die überraschende Erkenntnis zugrunde, daß nicht nur die Rohrwandung an der für die Festigkeit kritischen Überlappung bzw. Wickelnaht zusätzlich verstärkt wird, so daß damit auch eine Erhöhung der Festigkeit des Wickelrohres an sich erreicht wird, sondern daß durch den Schrumpfvorgang beim Abkühlen ein zusätzlicher Druck auf die überlappte Stelle bzw. Wickelnaht entsteht, der für eine einwandfreie Verbindung sorgt. Durch Druck auf die Überlappung bzw. Wickelnaht wird nämlich ein Ineinanderfließen des überlappten bzw. aneinanderstoßenden Bandmaterials begünstigt, so daß eine homogene Verbindung entlang der Wickelnaht entsteht. Darüber hinaus ist an dem fertigen Wickelrohr keine Naht mehr zu erkennen, so daß das Rohr oder dgl. Formstück wie aus einem Guß aussieht.

Die verfahrensmäßige Lösung der der Erfindung zugrundeliegenden Aufgabe sieht vor, daß bei Rohren oder dgl. Formstücken aus thermoplastischem Kunststoff, insbesondere solchen aus schraubenlinienförmig gewickeltem Bandmaterial, bei denen das Bandmaterial und Erwärmen mit überlappender oder gestoßener Wickelnaht auf eine Wickeltrommel aufgewickelt und im Bereich der Wickelnaht durch Wärme und Druck verschmolzen bzw. verschweißt wird, wobei das spiralgewickelte Band im Bereich der Verbindung eine mehr oder weniger große Überlappung aufweist, und wobei die Rohre eine in einer Profildüse geformte und spiralförmig auf das Bandmaterial aufgebrachte Profilverstärkung aufweisen, das als Längsverstärkung dienende Verstärkungsprofil genau über die Überlappung des Bandmaterials gelegt wird.

Weitere Merkmale, Vorteile und Anwendungsmöglichkeiten der Erfindung ergeben sich aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: eine Seitenansicht eines erfindungsgemäßen Rohres oder dgl. Formstück,
- Fig. 2: einen Teilschnitt durch die Wandung des in Fig. 1 gezeigten Rohres oder dgl. Formstück entlang der Längsachse des Rohres und
- Fig. 3: einen Teilschnitt durch eine Wickeltrommel zur Herstellung des erfindungsgemäßen Rohres oder dgl. Formstück zur Veranschaulichung der verfahrensmäßigen Lösung der Erfindung.

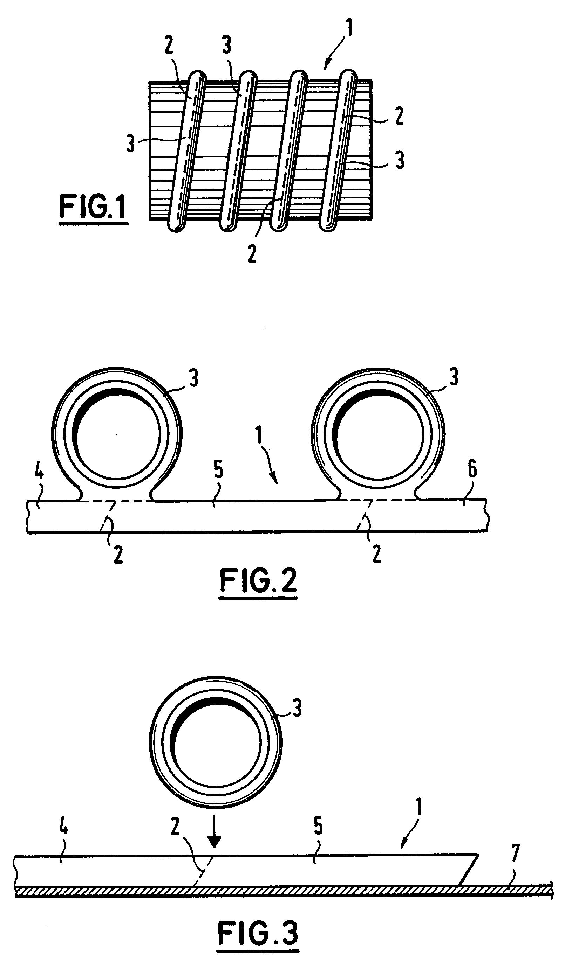

Das in Fig. 1 gezeigte Wickelrohr 1 besteht aus einem schraubenlinienförmig gewickelten Bandmaterial aus thermoplastischem Kunststoff, das zur Herstellung des Wickelrohres auf eine Wickeltrommel aufgewickelt worden ist und dessen Bandmaterial durch Wärme im Bereich einer Wickelnaht 2 verschmolzen bzw. verschweißt worden ist. In der Fig. 1 ist die Wickelnaht 2 gestrichelt dargestellt, da sie von einer als Hohlprofilrohr 3 ausgebildeten Längsverstärkung abgedeckt ist.

Wie aus den Fig. 2 und 3 zu ersehen ist, ist das als Längsverstärkung dienende Hohlprofilrohr 3 unmittelbar auf der Wickelnaht 2 zweier aneinandergrenzender Materialbänder 4 und 5 bzw. 5 und 6 angeordnet. Die Herstellung eines derartigen Wickelrohres oder dgl. Formstück geschieht wie folgt:

Zunächst wird aus thermoplastischem Kunststoff bestehendes bis zu seinem plastischen Zustand erwärmtes Bandmaterial schraubenlinienförmig auf eine Wickeltrommel 7 aufgebracht (Fig. 3). Dabei kann das Bandmaterial entweder ein- oder mehrlagig und überlappend oder auf Stoß auf die Wickeltrommel 7 gewickelt werden. Durch die Wärme und ggf. auch durch Druck verschmelzen die aneinander grenzenden bzw. sich überlappenden Materialbänder miteinander. Gleichzeitig oder zumindest sehr zeitnah zum Aufbringen des Bandmaterials für die Wandung der Wickelrohre oder dgl. Formstücke wird eine als Hohlprofilrohr 3 ausgebildete Profilverstärkung auf die Wickelnaht 2 der Materialbänder 4, 5 bzw. 5, 6 derart aufgebracht, daß sie die Überlappung des Bandmaterials für die Wandung der Wickelrohre oder dgl. Formstücke überdecken.

Die Profilverstärkungen können unterschiedliche Profilformen aufweisen. Im dargestellten Ausführungsbeispiel handelt es sich um ein rundes Profilrohr, das in einer nicht dargestellten Vorrichtung geformt und spiralförmig auf das Bandmaterial für die Wandung der Rohre oder dgl. Formstücke aufgebracht worden ist. Es können aber auch vierkantige, dreikantige oder ähnliche Profilformen verwendet werden.

Wie insbesondere aus Fig. 2 zu ersehen ist, wird durch die Anordnung des Hohlprofilrohres 3 auf der Wickelnaht 2 zwischen den Materialbändern 4 und 5 bzw. 5 und 6 die Überlappung dieser Materialbänder überbrückt. Von außen, d.h. in der Fig. 2 von oben, ist die Wickelnaht 2 damit nicht mehr zu erkennen. Durch den Schrumpfvorgang beim Abkühlen des thermoplastischen Materials entsteht ein zusätzlicher Druck auf die Wickelnaht 2, der für eine einwandfreie Verbindung sorgt.

## Patentansprüche

1. Rohr oder dgl. Formstück wie zylindrischer Behälter mit einer Wandung aus thermoplastischem Kunststoff, insbesondere aus schraubenlinienförmig umlaufendem Bandmaterial, wobei die Wandung eine längs des Materialbandes verlaufende verschmolzende Wickelnaht aufweist, und mit einem als Längsverstärkung dienenden, auf der Außenseite der Wandung aufgebrachten umlaufenden Profilmaterial (Profilverstärkung), insbesondere einem Hohlprofilrohr, **dadurch gekennzeichnet**, daß das Profilmaterial auf der Wickelnaht (2) der Wandung angeordnet ist und die Überlappung eines oder mehrerer Materialbänder (4, 5, 6) überdeckt.

2. Verfahren zur Herstellung von Rohren oder dgl. Formstücken aus thermoplastischen Kunststoffen, insbesondere aus schraubenlinienförmig gewickeltem Bandmaterial, wobei das Bandmaterial nach Erwärmen mit überlappender oder gestoßener Wickelnaht auf eine Wickeltrommel aufgewickelt und im Bereich der Wickelnaht durch Wärme und Druck verschmolzen wird, wobei das spiralgewickelte Band im Bereich der Verbindung eine mehr oder weniger große Überlappung aufweist, und mit einer in einer Vorrichtung geformten und spiralförmig auf das Bandmaterial aufgebrachten Profilverstärkung, **dadurch gekennzeichnet**, daß das als Längsverstärkung dienende Verstärkungsprofil genau über die Überlappung des Bandmaterials gelegt wird.
